Europäisches Patentamt

European Patent Office

Office européen des brevets

(11) Publication number: **0 176 233**
**A1**

(12) **EUROPEAN PATENT APPLICATION**

(21) Application number: **85305992.1**

(22) Date of filing: **22.08.85**

(51) Int. Cl.⁴: **F 16 L 5/00**
**F 16 L 59/05, E 04 D 13/14**

(30) Priority: **22.08.84 AU 6715/84**

(43) Date of publication of application:
**02.04.86 Bulletin 86/14**

(84) Designated Contracting States:
**AT BE CH DE FR GB IT LI LU NL SE**

(71) Applicant: **O'Shea, William Leslie**
**4 Macartney Street**
**Ermington New South Wales 2115(AU)**

(72) Inventor: **O'Shea, Diane Cheryl**
**4 Macartney Street**
**Ermington New South Wales, 2115(AU)**

(74) Representative: **Watson, Anthony Stephen**
**Bailey, Walsh & Co 5 York Place**
**Leeds LS1 2SD(GB)**

(54) **Pipe sleeve.**

(57) A pipe or like service sleeve comprising a metal sleeve (6) formed as an open ended cylinder and having a full length longitudinal cut (9) therein, stopping material (7) disposed around the internal surface of the sleeve (6) and adapted, when the longitudinally cut portion (9) of the sleeve (6) is joined in a predetermined position around a pipe (2) or like service of predetermined dimensions to uniformly fill the cavity between the metal sleeve (6) and the pipe (2) or like service.

FIG. 2.

FIG. 3.

PIPE SLEEVE

The present invention relates to sleeves which facilitate stopping of the area between a pipe or other service and a surrounding floor, wall or roof.

In order that expansion, service, or replacement of pipes and other services passing through walls, floors or roofs of buildings may be accommodated it is not desirable or in many cases permissible to cement such pipes or services directly into a wall. For the purposes of the present specification the term "wall" where hereafter used shall mean a wall, floor, ceiling, roof or the like.

Most specifications for the installation of pipes in buildings consequently specify that an open ended sleeve be incorporated in the wall at the point where a pipe or other service is to pass through such wall. When the pipe or service is subsequently installed the vacant area between the pipe and sleeve is filled with stopping material which stopping material is usually required to have a certain fire rating and may additionally have acoustic qualities such that noise may not readily pass through the sleeve. Traditionally the sleeve has been built into the wall and then, once the pipe or service is in place, stopping material is pushed into the area between the sleeve and the pipe. In order that most stopping materials may provide an adequate fire rating however it is necessary that they are compressed to a predetermined extent and furthermore it is desirable that the stopping entirely fills the area between the pipe and the sleeve. It is difficult if not impossible when pushing stopping material into the area between the pipe and the sleeve to ensure that the material is uniformly compressed to a specified degree and it is likewise difficult to ensure that no voids or gaps occur in the stopping. Indeed after the stopping material has been inserted between the pipe and the sleeve it is virtually impossible, without removing the stopping, to check whether the stopping entirely fills such cavity or whether the person who installed the stopping has merely installed sufficient stopping material so as to fill the cavity on either side adjacent the external wall surfaces whilst failing to fill the cavity at a point intermediate the two wall surfaces.

It is the object of the present invention to provide a product for sleeving pipes or like services which is relatively simple to install and which, if the correct size of sleeve is utilised, will result in an installation which is reliably stopped.

According to the present invention there is provided a pipe or like service sleeve comprising a metal sleeve formed as an open ended cylinder and having a full length longitudinal cut therein; stopping material disposed around the internal surface of the sleeve and adapted, when the longitudinally cut portion of the sleeve is joined in a predetermined position around a pipe or like service of predetermined dimensions to uniformly fill the cavity between the metal sleeve and the pipe or like service.

One embodiment of the present invention will now be described with reference to the accompanying drawings wherein:-

Figure 1 is a longitudinal section through a sleeve stopped in conventional manner and not in accordance with the present invention;

Figure 2 is a perspective view of a sleeve in accordance with the present invention prior to installation;

Figure 3 is a transverse section through a sleeve in accordance with the present invention; and

Figure 4 is a perspective view of a sleeve in accordance with the present invention installed around a pipe and partially built into a wall.

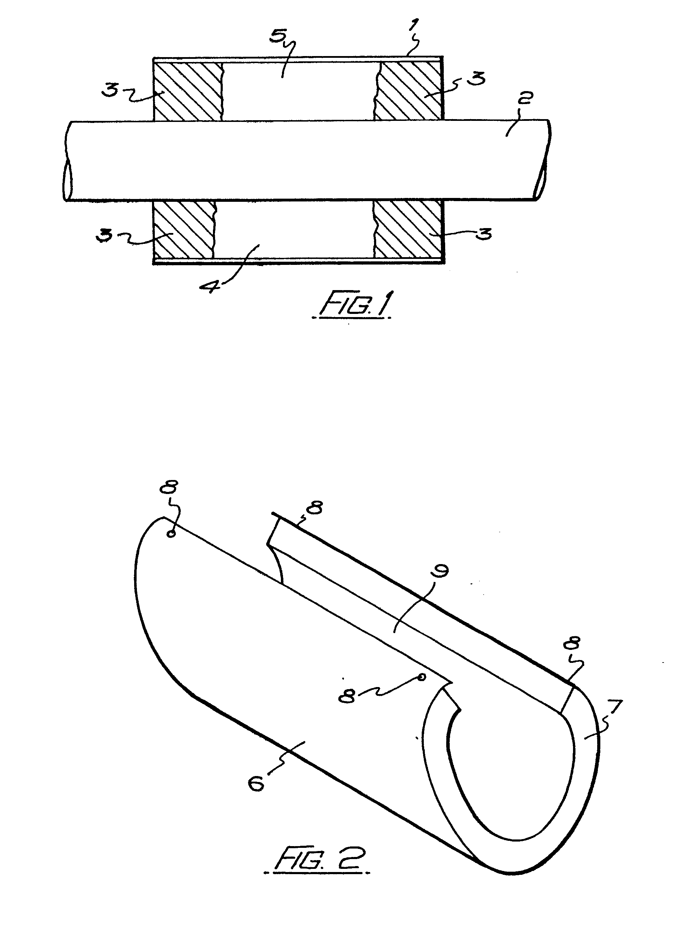

Figure 1 depicts a conventional metal sleeve 1 in place around a pipe 2 although the wall which would normally surround the sleeve 1 is not shown. It may be seen that in accordance with known methods stopping material 3 has been inserted in the cavity 4 between the pipe 2 and the sleeve 1. It may furthermore be seen however that the stopping material 3 does not penetrate into the inaccessible portions of the cavity 5 and consequently the fire rating of a wall incorporating the sleeve or indeed the acoustic qualities of the wall may not be up to the standard required. The limited access provided by the annular aperture at either end of the sleeve additionally makes it difficult to ensure that the stopping material 3 is adequately compressed in all localities.

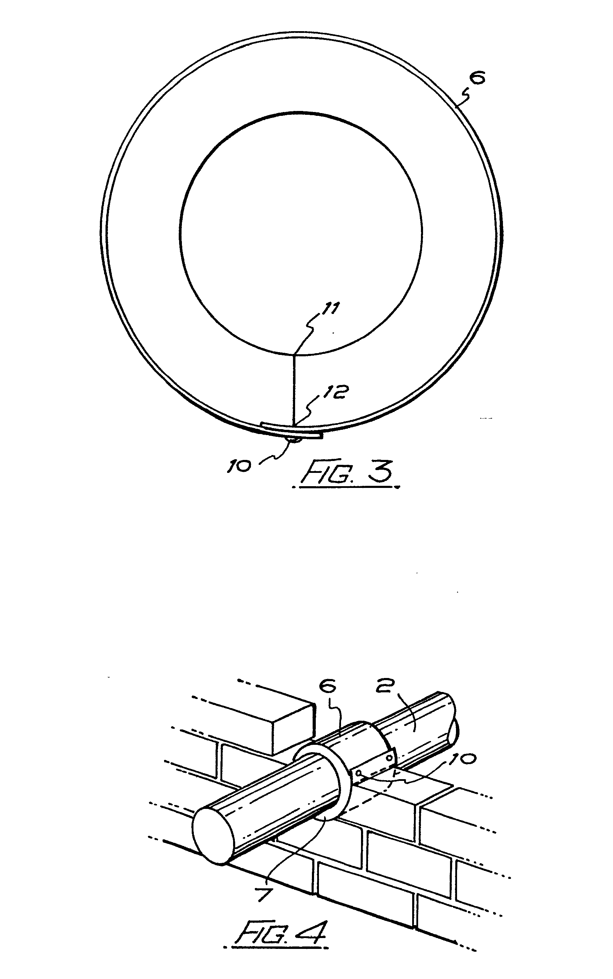

Figures 2, 3 and 4 however depict a sleeve in accordance with the present invention comprising a metal sleeve 6 having stopping material 7 uniformly disposed around the inner surface thereof. This stopping material in this instance is a ceramic fibre such as "kao wool" TM having high insulating qualities and being non-flammable. Other known stopping materials however such as asbestos, rockwool fibreglass or similar materials may be utilised.

The stopping material, which may be supplied in the form of a blanket, is fixed onto the internal surface of the sleeve so as to prevent dislodgment and misalignment during installation. In this instance "liquid nails" TM adhesive has been found appropriate although many other solvent or water based non-flammable adhesives or other fixing means such as staples may be appropriate.

The manufacturers specifications for kao wool of 96 kilogram per cubic metre state that a uniform compression of 25% will achieve an adequate fire rating for most applications and consequently the sleeve 6 is provided with markings 8 such that when the markings on either part of the longitudinal slit 9 in the sleeve are aligned around a pipe of specified dimensions then adequate compression of the stopping material is automatically achieved. The calibrating means in this instance merely comprises holes on either side of the longitudinal slit which when superimposed upon each other may be utilised to secure the sleeve into a permanent closed circular section as depicted in Figure 3 by means of a rivet 10 or like fastening. It is of course desirable that the stopping material be trimmed during manufacture adjacent the longitudinal cut in the sleeve such that bunching or gaps in the stopping material will not occur when the sleeve is closed to the predetermined specifications. This requires that the blanket or stopping material have its edges cut at an angle in order that when in place in a closed sleeve the internal surface of the blanket may correctly meet at 11 whereas the external surface of the blanket may similarly meet at 12. Merely cutting the blanket at right angles to the plane of the blanket will not achieve this result.

The sheet from which the sleeve 6 is fabricated may be of any suitable metal; for example galvanized iron,

0176233

copper, aluminium, stainless steel etc. The gauge of the metal should however be such that during installation it may be expanded to be placed around a pipe and subsequently readily closed to the relevant markings by the installer. It has been found that when a galvanized sleeve is utilised gauges between 14 and 26 are appropriate.

Those skilled in the art will appreciate that the present invention may save much time in the construction of a building and result in sleeves with more reliable fire and acoustic ratings. The sleeve may even for example be placed around a pipe prior to a bricklayer forming a wall around the sleeve and in such instances the sleeve will be maintained around the pipe in the desired concentric manner until bricked in as depicted in Figure 4. In vertical installations the sleeve may furthermore remain in the desired location until formed into a structure.

## CLAIMS

1.  A pipe or like service sleeve comprising a metal sleeve formed as an open ended cylinder and having a full length longitudinal cut therein; stopping material disposed around the internal surface of the sleeve and adapted, when the longitudinally cut portion of the sleeve is joined in a predetermined position around a pipe or like service of predetermined dimensions to uniformly fill the cavity between the metal sleeve and the pipe or like service.

2.  A sleeve in accordance with claim 1 having calibrating means adjacent the longitudinal cut to determine the ideal position in which to join the cut to achieve uniform and adequate stopping.

3.  A sleeve in accordance with claim 1 or claim 2 wherein the stopping material is a blanket of ceramic material.

4.  A sleeve in accordance with claim 3 wherein the blanket is affixed to the inside of the sleeve by a solvent or water based non-flammable adhesive.

5.  A sleeve in accordance with claim 2 wherein the calibrating means comprise one or more sets of apertures on either side of the longitudinal slit adapted to be brought into register by closing of the cut and through riveted.

6.  A sleeve substantially as hereinbefore described with reference to the figures 2 - 4 hereof.

_FIG.1_

_FIG. 2_

0176233

FIG. 3

FIG. 4

European Patent Office

**EUROPEAN SEARCH REPORT**

0176233 Application Number

| DOCUMENTS CONSIDERED TO BE RELEVANT | | EP 85305992.1 |
|---|---|---|

| Category | Citation of document with indication, where appropriate, of relevant passages | Relevant to claim | CLASSIFICATION OF THE APPLICATION (Int. Cl.4) |
|---|---|---|---|
| X | US - A - 690 350 (T.P. BOLGER)<br>* Column 1, line 43 - column 2, line 2; fig. 2,3 * | 1,2,5,6 | F 16 L 5/00<br>F 16 L 59/05<br>E 04 D 13/14 |
| A | DE - A1 - 2 900 924 (KREBES)<br>* Totality * | 1,2,4,6 | |
| A | DE - A1 - 2 928 165 (STEFFENS)<br>* Totality * | 1,2,5,6 | |
| A | US - A - 4 219 173 (FORBES)<br>* Totality * | 1 | |
| A | GB - A - 2 077 382 (MANN MC GOWAN)<br>* Totality * | 1 | TECHNICAL FIELDS SEARCHED (Int. Cl.4) |
| A | US - A - 2 054 308 (E.M. TUCKER) | | F 16 L 5/00<br>F 16 L 7/00<br>F 16 L 59/00<br>E 04 D 13/00 |

The present search report has been drawn up for all claims

| Place of search | Date of completion of the search | Examiner |
|---|---|---|
| VIENNA | 06-11-1985 | SCHUGANICH |